Europäisches Patentamt

European Patent Office

Office européen des brevets

(19)

(11) **EP 0 912 441 B1**

(12) **EUROPÄISCHE PATENTSCHRIFT**

(45) Veröffentlichungstag und Bekanntmachung des Hinweises auf die Patenterteilung:
**06.09.2000   Patentblatt 2000/36**

(51) Int Cl.[7]: **C01B 17/94**

(21) Anmeldenummer: **96922788.3**

(22) Anmeldetag: **16.07.1996**

(86) Internationale Anmeldenummer:
**PCT/EP96/01719**

(87) Internationale Veröffentlichungsnummer:
**WO 98/02381 (22.01.1998 Gazette 1998/03)**

(54) **VERFAHREN ZUM ENTFERNEN VON NO x? AUS NITROSYL-SCHWEFELSÄURE**

PROCESS FOR REMOVING NO x? FROM NITROSYLSULPHURIC ACID

PROCEDE D'ELIMINATION DU NO x? CONTENU DANS L'ACIDE NITROSYLSULFURIQUE

(84) Benannte Vertragsstaaten:
**BE DE ES FI FR NL PT SE**

(43) Veröffentlichungstag der Anmeldung:
**06.05.1999   Patentblatt 1999/18**

(73) Patentinhaber: **Metallgesellschaft Aktiengesellschaft**
**60325 Frankfurt am Main (DE)**

(72) Erfinder:
 • **SCHMIDT, Georg**
  **D-60431 Frankfurt am Main (DE)**
 • **WINKLER, Egon**
  **D-65439 Flörsheim (DE)**
 • **WAGNER, Hartmut**
  **D-47447 Moers (DE)**
 • **APEL, Ronald**
  **D-47447 Moers (DE)**

 • **FACH, Roland**
  **D-46514 Schermbeck (DE)**
 • **KNOBLICH, Dieter**
  **D-47198 Duisburg (DE)**
 • **STOUGIE, Peter-Bernhard**
  **D-47198 Duisburg (DE)**

(56) Entgegenhaltungen:
  **GB-A- 348 866          US-A- 4 155 989**

 • **DATABASE WPI Week 9115 Derwent Publications Ltd., London, GB; AN 108779 XP002027953 P.P. KIM ET AL.: "Denitration of spent sulphuric acid." & SU 1 586 996 A (GORKI POLY) , 23.August 1990 & CHEMICAL ABSTRACTS, vol. 113, no. 26, 24.Dezember 1990 Columbus, Ohio, US; abstract no. 234134, P.P.KIM ET AL.: "Method of denitration of spent sulfuric acid."**

**Beschreibung**

Die Erfindung betrifft ein Verfahren zum Entfernen von $NO_x$ aus NOx-haltiger Schwefelsäure durch Mischen der $NO_x$-haltigen Schwefelsäure in einem Mischreaktor mit Schwefelsäure, die mit $SO_2$ gesättigt ist, wobei man aus dem Mischreaktor eine $N_2O_3$ enthaltende Schwefelsäure abzieht und durch die abgezogene Schwefelsäure ein Strippgas leitet.

Ein solches Verfahren ist aus GB-A-0348866 bekannt. Hierbei leitet man zum Austreiben restlicher Stickstoffoxide aus der Schwefelsäure Rauchgas oder ein Inertgas durch die Schwefelsäure, wobei die Temperatur im Bereich von 100 bis 200 °C liegt.

In Database WPI, AN91-108 779, wird beschrieben, $NO_x$ enthaltende Schwefelsäure (Abfallsäure) mit Kreislaufsäure zu mischen und einer sogenannten zweiten Säule aufzugeben. In den unteren Bereich der zweiten Säule wird $SO_2$-Gas eingeleitet, das aus einer sogenannten ersten Säule kommt. Ein Teil der aus der zweiten Säule abgezogenen Kreislaufsäure wird der ersten Säule aufgegeben, in welche $SO_2$ im Überschuß zugeführt wird. Das Abgas der zweiten Säule enthält kein $SO_2$, und die aus der ersten Säule abgezogene Schwefelsäure, die frei von $NO_x$ ist, enthält 75 Gew.-% $H_2SO_4$. Ein Vermischen der Abfallsäure von mit $SO_2$ gesättigter Schwefelsäure findet beim bekannten Verfahren nicht statt.

Der Erfindung liegt die Aufgabe zugrunde, $NO_x$ aus der $NO_x$-haltigen Schwefelsäure auf einfache und kostengünstige Weise zu entfernen. Erfindungsgemäß gelingt dies beim eingangs genannten Verfahren dadurch, daß man die aus dem Mischreaktor abgezogene, $N_2O_3$ enthaltende Schwefelsäure einem Sättigungsreaktor aufgibt, wobei man in den unteren Bereich des Sättigungsreaktors gleichzeitig ein $SO_2$-haltiges Gas einleitet, welches mindestens teilweise aufwärts durch die $N_2O_3$ enthaltende Schwefelsäure strömt, daß man Wasser in den Sättigungsreaktor leitet und aus dem Sättigungsreaktor mit $SO_2$ gesättigte, praktisch $NO_x$-freie Schwefelsäure mit einer $H_2SO_4$-Konzentration von 5 bis 60 Gew.-% abzieht, von der man einen Teilstrom in den Mischreaktor leitet, wobei man dem Mischreaktor $SO_2$ in einem stöchiometrischen Überschuß von mindestens 2 Gew.-%, bezogen auf den $NO_x$-Gehalt der NOx-haltigen Schwefelsäure, zuführt. Bei der $NO_x$-haltigen Schwefelsäure handelt es sich um Nitrosylschwefelsäure.

Der Ausdruck $NO_x$ bezieht sich im Sinne der Erfindung auf ein Gemisch aus NO und $NO_2$. $NO_x$ ist in der Schwefelsäure gelöst, wobei Nitrosylschwefelsäure entsteht. Gebildet wird die Nitrosylschwefelsäure aus NO, das in $SO_2$-haltigem Gas enthalten ist. Das $SO_2$-haltige Gas stammt z.B aus einem Röstungs-, Schwefelverbrennungs-, Sulfatabspaltungs- oder metallurgischen Prozeß. NO wird am Oxidationskatalysator einer Schwefelsäureanlage bis zu 50 % zu $NO_2$ oxidiert. Das Gemisch aus NO und $NO_2$ wird mit Schwefelsäure zu Nitrosylschwefelsäure wie folgt umgesetzt:

$$NO + NO_2 + 2H_2SO_4 \longrightarrow 2HNOSO_4 + H_2O$$

Es ist bekannt, daß $SO_2$ mit Nitrosylschwefelsäure unter Bildung von Schwefelsäure und Stickoxiden reagiert:

$$SO_2 + 2HNOSO_4 + 2H_2O \longrightarrow 3H_2SO_4 + 2NO.$$

Bei der Schwefelsäureherstellung wird Nitrosylschwefelsäure, üblicherweise mit einem $NO_x$-Gehalt von über 2,5 Gew.- %, als Kondensat abgeschieden. Der $NO_x$-Gehalt liegt in dem Kondensat neben der Schwefelsäure als Nitrosylschwefelsäure vor.

Formal betrachtet, kann man die Nitrosylschwefelsäure mit $SO_2$ und Wasser zu Schwefelsäure und $N_2$ umsetzen. Die Redoxreaktion findet zwischen dem gelösten $SO_2$ als $SO_3^{2-}$ mit dem aus der Hydrolyse der Nitrosylschwefelsäure entstandenen $N_2O_3$ als $NO_2^-$ statt. Die Reduktion der Stickoxide NO und $NO_2$ bis zum Stickstoff wird bei der Hydrolyse der Nitrosylschwefelsäure mit verdünnter, $SO_2$-gesättigter Schwefelsäure dadurch bewirkt, daß in der Verdünnungslösung das Reduktionsmittel als $SO_3^{2-}$ in überstöchiometrischer Menge bereitgestellt wird, so daß sich das Gleichgewicht in Richtung der $N_2$-Bildung verschiebt.

Ein Vorteil der vorliegenden Erfindung liegt darin, daß man den Schwefelsäureanteil eines Nitrosylschwefelsäure enthaltenden Kondensats $NO_x$-frei in den Kreislauf einer Schwefelsäureherstellung zurückführen kann. Nach den herkömmlichen Verfahren wird das Kondensat aus dem Verfahren abgezogen und muß aufgearbeitet oder entsorgt werden. Ein besonderer Vorteil des erfindungsgemäßen Verfahrens liegt darin, daß aus dem Schadstoff $NO_x$ Stickstoff gebildet und mit dem Abgas abgeführt wird.

Vorzugsweise wird dem Mischreaktor $SO_2$ in einem stöchiometrischen Überschuß von mindestens 5 Gew.-%, bezogen auf den $NO_x$-Gehalt in der NOx-haltigen Schwefelsäure, zugeführt. Mit diesem Überschuß an $SO_2$ wird ein gutes Ergebnis bei der Reduktion des $NO_x$-Gehaltes erreicht. $SO_2$ geht durch die Reduktion von $NO_x$ zu $N_2$ nicht verloren, sondern wird zu $SO_4^{2-}$ oxidiert. Man kann überschüssiges $SO_2$ in eine Anlage zur Schwefelsäureherstellung führen, so daß eine aufwendige Aufarbeitung nicht erforderlich ist.

Es ist vorteilhaft, daß die Schwefelsäurekonzentration nach der $SO_2$-Zugabe 5 bis 30 beträgt. In diesem Bereich der Schwefelsäurekonzentration werden besonders gute Ergebnisse bei der Reduktion von $NO_x$ zu $N_2$ erreicht.

Eine vorteilhafte Ausgestaltung der Erfindung ist, daß gasförmiges $SO_2$ in einem als Füllkörpersäule ausgebildeten Sättigungsreaktor in wäßrige Lösung gebracht und als wäßrige Lösung mit der $NO_x$ enthaltenden Schwefelsäure vereinigt wird. Dabei wird die $SO_2$-

Sättigung durch Betreiben des Sättigers unter erhöhtem Gasdruck begünstigt.

Erfindungsgemäß ist vorgesehen, daß der $NO_x$-Gehalt in einer $NO_x$ enthaltenden Schwefelsäure Nitrosylschwefelsäure) oder in einem $NO_x$ enthaltenden Schwefelsäuregemisch verringert wird. Das erfindungsgemäße Verfahren läßt sich vorteilhafterweise nicht nur auf $NO_x$ enthaltende Schwefelsäure, sondern mit sehr guten Ergebnissen auch auf $NO_x$ und Schwefelsäure enthaltende Gemische, wie z.B. Nitriersäure oder mit anderen Verbindungen verunreinigte Schwefelsäure, anwenden.

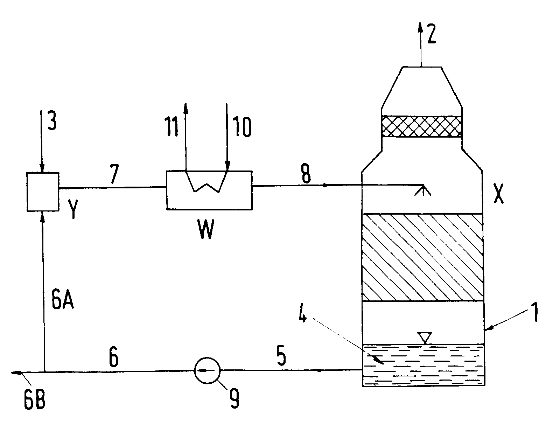

Ausgestaltungsmöglichkeiten der Erfindung werden anhand einer Zeichnung und Beispielen näheren erläutert. Die Zeichnung zeigt ein Fließschema des Verfahrens.

Die wichtigsten Verfahrensteile sind der Reaktor (X) für die $SO_2$-Sättigung und der Mischreaktor (Y) für Hydrolyse und Redoxreaktion der Nitrosylschwefelsäure mit $SO_2$-haltiger verdünnter Schwefelsäure. $SO_2$-haltiges Röstgas wird über die Leitung (1) und Wasser wird durch die Leitung (4) in den unteren Bereich des Sättigungsreaktors (X) eingeleitet. Über die Leitung (3) wird Nitrosylschwefelsäure oder diese Säure enthaltendes Kondensat dem Mischreaktor (Y) zugeführt. Im Prinzip wird zwischen den Reaktoren (X) und (Y) verdünnte Schwefelsäure über die Leitungen (5), (6), (6A), (7) und (8) im Kreislauf geführt. Gebildete Schwefelsäure wird durch die Leitung (6B) abgezogen und $N_2$ wird mit dem Abgas über die Leitung (2) abgeführt.

Durch die Leitung (5) wird Schwefelsäure aus dem Sättigungsreaktor (X) abgeleitet und durch eine Pumpe (9) geführt. Diese Schwefelsäure ist mit $SO_2$ gesättigt, sie ist praktisch $NO_x$-frei und sie weist eine $H_2SO_4$-Konzentration von 5 bis 60 Gew.-% und zumeist höchstens 35 Gew.-% auf. Aus der Pumpe (9) wird die Schwefelsäure über die Leitung (6) abgeführt. Ein Teilstrom der Säure wird durch die Leitung (6A) dem Mischreaktor (Y) zugeführt. Die aus dem Reaktor (Y) in der Leitung (7) abgezogene, noch $N_2O_3$ enthaltende Säure gelangt zum indirekten Kühler (W). Dem Kühler wird über die Leitung (10) Kühlwasser zugeführt, welches in der Leitung (11) abgezogen wird. Gekühlte Schwefelsäure wird über die Leitung (8) in den Sättigungsreaktor (X) eingeleitet. Der Reaktor (X) enthält mindestens eine Füllkörperschicht. Im Reaktor (X) dient aufwärts strömendes $SO_2$-haltiges Gas als Strippgas zum Entfernen von restlichen Stickstoffoxiden aus der durch Leitung (8) herangeführten Schwefelsäure.

Beispiel 1:

In einer der Zeichnung entsprechenden Anordnung wird wie folgt gearbeitet: Über die Leitung (3) werden 240 kg/h Kondensat mit einem Nitrosylschwefelsäuregehalt von 9,5 % $HNOSO_4$ entsprechend 6,8 kg/h $N_2O_3$ in den Mischreaktor (Y) eingeleitet. Das Kondensat kommt aus einer Schwefelsäureproduktion.

Über die Leitung (6A) wird eine $SO_2$-gesättigte Schwefelsäure mit 20 Gew.-% $H_2SO_4$ dem Reaktor (Y) zugeführt, das Kondensat und die $SO_2$-gesättigte Schwefelsäure werden gemischt. Dabei reagiert das gelöste $SO_2$ mit der Nitrosylschwefelsäure zu Schwefelsäure und Stickstoff. Das Gemisch wird über die Leitung (7) abgeführt und weist hinter dem Blockkühler (W) noch einen Gehalt von 465 mg $N_2O_3$/l auf, das entspricht einem Gehalt von 2,0 kg $N_2O_3$/h. Im Sättigungsreaktor (X) wird die zirkulierende Schwefelsäure mit $SO_2$ gesättigt, wobei man $SO_2$-haltiges Röstgas, das 0,28 g/h $NO_x$ enthält, über die Leitung (1) heranführt. Die Konzentration der Schwefelsäure wird durch geregelte Wasserzugabe über die Leitung (4) auf 20 Gew.-% $H_2SO_4$ eingestellt. Das den Reaktor (X) über die Leitung (2) verlassende Röstgas weist einen verringerten $SO_2$-Gehalt auf und wird als feuchtes Gas zurück in die Schwefelsäureherstellung geleitet. Das Gas der Leitung (2) enthält 3,125 mg $NO_x/Nm^3$, entsprechend 2,0 kg $N_2O_3$ pro Stunde. In der Schwefelsäure in den Leitungen (6B) und (6A) war $NO_x$ nicht mehr nachweisbar. Der Denitrierungsumsatz beträgt 71,75%.

Beispiel 2:

Beispiel 2 wird wie Beispiel 1 durchgeführt, jedoch mit den folgenden Unterschieden: Dem Mischreaktor (Y) wird $SO_2$-gesättigte Schwefelsäure mit 16 Gew.-% $H_2SO_4$ über die Leitung (6A) zugeführt. Die Schwefelsäure enthält nach dem Blockkühler (W) in der Leitung (8) 400 mg $N_2O_3$/l entsprechend 1,7 kg $N_2O_3$/h. Im Sättigungsreaktor (X) wird nach geregelter Wasserzugabe über die Leitung (4) eine Schwefelsäure mit einer Konzentration von 16 Gew.-% $H_2SO_4$ erzeugt, die in der Leitung (5) abgezogen wird. Diese Schwefelsäure ist $NO_x$-frei. Der Denitrierungsumsatz beträgt 80,23 %:

Beispiel 3:

Man arbeitet wie in den Beispielen 1 und 2, aber mit den folgenden Unterschieden:

Über die Leitung (3) werden 190 kg/h Kondensat in den Mischreaktor (Y) eingeleitet. Das Kondensat weist einen Nitrosylschwefelsäuregehalt von 7,5 Gew.-% $HNOSO_4$ entsprechend 4,3 kg $N_2O_3$ pro Stunde auf. Das Kondensat wird im Mischreaktor (Y) mit einer 33 %-igen $SO_2$-gesättigten Schwefelsäure aus der Leitung (6A) gemischt. Nach dem Blockkühler (W) weist in der Leitung (8) die Schwefelsäure 350 mg $N_2O_3$/l entsprechend 1,5 kg $N_2O_3$/h auf. Im Sättigungsreaktor (X) wird durch geregelte Wasserzugabe eine Schwefelsäure mit einer Konzentration von 33 Gew.-% $H_2SO_4$ eingestellt und durch die Leitung (5) abgezogen. Die Säure ist $NO_x$-frei. Das über die Leitung (2) abgeführte $SO_2$-Gas enthält 4700 mg $NO_x/Nm^3$ entsprechend 3,0 kg $N_2O_3$/h. Der Denitrierungsumsatz beträgt 34,5%.

Der Vergleich der Beispiele 1,2 und 3 macht deutlich, daß eine Abhängigkeit zwischen dem $NO_x$-Umsatz und der Konzentration der zirkulierenden Schwefelsäure besteht. Je höher die Konzentration der im Kreislauf geführten Schwefelsäure ist, desto niedriger ist der Denitrierungsumsatz.

Der Vorteil eines möglichst hohen Denitrierungsumsatzes liegt darin, daß die im Kreislauf geführte Menge an $NO_x$ geringer ist. $NO_x$, das in der Denitrierungsanlage nicht ausgeschleust wird, geht in den Hauptgasstrom zur Schwefelsäureanlage zurück, wo dann wieder Nitrosylschwefelsäure gebildet wird. Ein geringerer Denitrierungsumsatz erfordert eine größere Denitrierungsanlage.

## Patentansprüche

1. Verfahren zum Entfernen von $NO_x$ aus $NO_x$-haltiger Schwefelsäure durch Mischen der $NO_x$-haltigen Schwefelsäure in einem Mischreaktor mit Schwefelsäure, die mit $SO_2$ gesättigt ist, wobei man aus dem Mischreaktor eine $N_2O_3$ enthaltende Schwefelsäure abzieht und durch die abgezogene Schwefelsäure ein Strippgas leitet, dadurch gekennzeichnet, daß man die aus dem Mischreaktor abgezogene, $N_2O_3$ enthaltende Schwefelsäure einem Sättigungsreaktor aufgibt, wobei man in den unteren Bereich des Sättigungsreaktors gleichzeitig ein $SO_2$-haltiges Gas einleitet, welches mindestens teilweise aufwärts durch die $N_2O_3$ enthaltende Schwefelsäure strömt, daß man Wasser in den Sättigungsreaktor leitet und aus dem Sättigungsreaktor mit $SO_2$ gesättigte, praktisch $NO_x$-freie Schwefelsäure mit einer $H_2SO_4$-Konzentration von 5 bis 60 Gew.-% abzieht, von der man einen Teilstrom in den Mischreaktor leitet, wobei man dem Mischreaktor $SO_2$ in einem stöchiometrischen Überschuß von mindestens 2 Gew.-%, bezogen auf den $NO_x$-Gehalt der $NO_x$-haltigen Schwefelsäure, zuführt.

2. Verfahren nach Anspruch 1, dadurch gekennzeichnet, daß man die aus dem Mischreaktor abgezogene Schwefelsäure vor dem Einleiten in den Sättigungsreaktor kühlt.

3. Verfahren nach Anspruch 2, dadurch gekennzeichnet, daß man die aus dem Mischreaktor abgezogene Schwefelsäure mit Kühlwasser indirekt kühlt, wobei man erwärmtes Kühlwasser aus der indirekten Kühlung abzieht.

4. Verfahren nach Anspruch 1 oder einem der folgenden, dadurch gekennzeichnet, daß man dem Mischreaktor durch den Teilstrom der mit $SO_2$ gesättigten Schwefelsäure $SO_2$ in einem stöchiometrischen Überschuß von mindestens 5 Gew.-%, bezogen auf den $NO_x$-Gehalt der $NO_x$-haltigen Schwefelsäure, zuführt.

5. Verfahren nach Anspruch 1 oder einem der folgenden, dadurch gekennzeichnet, daß man aus dem Sättigungsreaktor mit $SO_2$ gesättigte Schwefelsäure mit einem $H_2SO_4$-Gehalt von 5 bis 35 Gew.-% abzieht.

6. Verfahren nach einem der Ansprüche 1 bis 5, dadurch gekennzeichnet, daß die $NO_x$-haltige Schwefelsäure aus einer Anlage zur Herstellung von Schwefelsäure aus $SO_2$-haltigem Röstgas kommt und $SO_2$-haltiges Röstgas in den unteren Bereich des Sättigungsreaktors geleitet wird.

## Claims

1. A process of removing $NO_x$ from $NO_x$-containing sulfuric acid by mixing the $NO_x$-containing sulfuric acid in a mixing tank with sulfuric acid saturated with $SO_2$, where a sulfuric acid containing $N_2O_3$ is withdrawn from the mixing tank and a stripping gas is passed through the withdrawn sulfuric acid, characterized in that the sulfuric acid containing $N_2O_3$, which was withdrawn from the mixing tank, is charged into a saturation reactor, and in the lower portion of the saturation reactor an $SO_2$-containing gas is introduced at the same time, which gas at least partly flows upwards through the sulfuric acid containing $N_2O_3$, that water is introduced into the saturation reactor and from the saturation reactor virtually $NO_x$-free sulfuric acid is withdrawn which is saturated with $SO_2$ and has a $H_2SO_4$ concentration of 5 to 60 wt-%, a partial stream of which sulfuric acid is introduced into the mixing tank, and $SO_2$ is supplied to the mixing tank in a stoichiometric surplus of at least 2 wt-%, based on the $NO_x$ content of the $NO_x$-containing sulfuric acid.

2. The process as claimed in claim 1, characterized in that the sulfuric acid withdrawn from the mixing tank is cooled before it is introduced into the saturation reactor.

3. The process as claimed in claim 2, characterized in that the sulfuric acid withdrawn from the mixing tank is cooled indirectly with cooling water, where heated cooling water is withdrawn from the indirect cooling.

4. The process as claimed in claim 1 or any of the preceding claims, characterized in that with the partial stream of $SO_2$-saturated sulfuric acid $SO_2$ is supplied to the mixing tank in a stoichiometric surplus of at least 5 wt-%, based on the $NO_x$ content of the $NO_x$-containing sulfuric acid.

5. The process as claimed in claim 1 or any of the preceding claims, characterized in that from the mixing tank $SO_2$-saturated sulfuric acid is withdrawn,

which has an $H_2SO_4$ content of 5 to 35 wt-%.

6. The process as claimed in any of claims 1 to 5, characterized in that the $NO_x$-containing sulfuric acid comes from a plant for producing sulfuric acid from $SO_2$-containing calcination gas, and $SO_2$-containing calcination gas is introduced into the lower portion of the mixing tank.

**Revendications**

1. Procédé pour éliminer du $NO_x$ d'un acide sulfurique à teneur en $NO_x$, en mélangeant l'acide sulfurique à teneur en $NO_x$ dans un réacteur de mélangeage à de l'acide sulfurique qui est saturé de $SO_2$, un acide sulfurique contenant du $N_2O_3$ étant soutiré du réacteur de mélangeage et un gaz d'entraînement étant envoyé dans l'acide sulfurique soutiré, caractérisé en ce que l'on alimente un réacteur de saturation en l'acide sulfurique soutiré du réacteur de mélangeage et contenant du $N_2O_3$, en même temps on introduit dans la partie inférieure du réacteur de saturation un gaz à teneur en $SO_2$ qui s'écoule au moins partiellement vers le haut dans l'acide sulfurique contenant du $N_2O_3$, en ce que l'on envoie de l'eau dans le réacteur de saturation et on soutire du réacteur de saturation de l'acide sulfurique qui est saturé de $SO_2$, qui est pratiquement exempt de $NO_x$, qui a une concentration en $H_2SO_4$ de 5 à 60 % en poids et dont on envoie un courant partiel au réacteur de mélangeage, du $SO_2$ étant envoyé au réacteur de mélangeage en un excès stoechiométrique d'au moins 2 % en poids rapporté à la teneur en $NO_x$ de l'acide sulfurique à teneur en $NO_x$.

2. Procédé suivant la revendication 1, caractérisé en ce que l'on refroidit l'acide sulfurique soutiré du réacteur de mélangeage avant l'introduction dans le réacteur de saturation.

3. Procédé suivant la revendication 2, caractérisé en ce que l'on refroidit indirectement par de l'eau de condensation l'acide sulfurique soutiré du réacteur de mélangeage, de l'eau de condensation chauffée étant soutirée du refroidissement indirecte.

4. Procédé suivant la revendication 1 ou l'une des suivantes, caractérisé en ce que l'on envoie au réacteur de mélangeage par le courant partiel de l'acide sulfurique saturé en $SO_2$ du $SO_2$ en un excès stoechiométrique d'au moins 5 % en poids rapporté à la teneur en $NO_x$ de l'acide sulfurique à teneur en $NO_x$.

5. Procédé suivant la revendication 1 ou l'une des suivantes, caractérisé en ce que l'on soutire du réacteur de saturation de l'acide sulfurique saturé de $SO_2$ ayant une teneur en $H_2SO_4$ de 5 à 35 % en poids.

6. Procédé suivant l'une des revendications 1 à 5, caractérisé en ce que l'acide sulfurique à teneur en $NO_x$ vient d'une installation de production d'acide sulfurique à partir de gaz de grillage à teneur en $SO_2$ et en ce que l'on envoie du gaz de grillage à teneur en $SO_2$ dans la partie inférieure du réacteur de saturation.